# EUROPÄISCHE PATENTANMELDUNG

(11) **EP 2 101 079 A2**
(43) Veröffentlichungstag der Anmeldung: **16.09.2009**
(21) Anmeldenummer: 09152001.5
(22) Anmeldetag: 04.02.2009
(51) Int. Cl.: F16G 1/28, B29D 29/00

(54) **Riemen, insbesondere Kraftübertragungsriemen, mit einer Beschichtung mit einem Polyisocyanurat - Polyharnstoff als Bindemittel und Verfahren zu seiner Herstellung**

(30) Priorität: 11.03.2008 DE 102008013570
(71) Anmelder: ContiTech Antriebssysteme GmbH, 30165 Hannover (DE)
(72) Erfinder: Oehl, Rainer, 30928 Burgwedel (DE); Fleck, Andreas, 30827 Garbsen (DE); Student, Peter, 30519 Hannover (DE); Mahnken, Claus-Lüder, 27367, Ahausen (DE); Teves, Reinhard, 30926 Seelze (DE)
(74) Vertreter: Finger, Karsten

(57) **Zusammenfassung**

Die Erfindung betrifft einen Riemen (1), insbesondere Kraftübertragungsriemen, wobei mindestens die verschleißabhängige, bewegungsübertragende Riemenoberfläche (7) eine Beschichtung (9) aus polymerem Werkstoff mit reibungsverringernden, die Gleiteigenschaften begünstigenden Eigenschaften aufweist.

Der erfindungsgemäße Riemen (1) zeichnet sich dadurch aus, dass das zusammenhaltende Basismaterial der Beschichtung (9) ein Polyisocyanurat - Polyharnstoff ist, das aus einem Isocyanat mit wenigstens zwei NCO-Gruppen als Basiskomponente gebildet ist, wobei durch geringe Mengen Wasser einige Harnstoffgruppen und durch geringe Mengen Diole oder Polyole einige Urethangruppen vorhanden sind.

Die bewegungsübertragende Riemenoberfläche (7) kann gegebenenfalls noch mit einem Gewebe (8) ausgestattet sein.

Darüber hinaus wird ein Verfahren zur Herstellung eines derartigen Riemens (1) vorgestellt.

## Beschreibung

Die Erfindung betrifft einen Riemen, insbesondere Kraftübertragungsriemen, aus elastomerem Werkstoff, wobei mindestens die verschleißabhängige, bewegungsübertragende Riemenoberfläche eine Beschichtung aus polymerem Werkstoff mit reibungsverringernden, die Gleiteigenschaften begünstigenden Eigenschaften aufweist.

Hinsichtlich der Technologie von Riemen, insbesondere Kraftübertragungsriemen, beispielsweise in Form von Zahnriemen, Keilriemen und Keilrippenriemen, wird insbesondere auf folgenden Stand der Technik verwiesen:
(1) DE 44 00 434 A1
(2) DE 100 16 351 A1
(3) EP 0 599 145 B1
(4) EP 0 662 571 B1
(5) EP 1 088 177 B1
(6) EP 1 108 750 A1
(7) EP 1 129 308 B1
(8) DE/EP 0 622 563 T1
(9) WO 2005/080821 A1

Während die Druckschrift (1) den nächst liegenden Stand der Technik beschreibt, umfassen die Druckschriften (2 bis 9) das technologische Umfeld der Riemen, und zwar unter dem Aspekt elastomerer Werkstoffe (z.B. EPM, EPDM, HNBR), eingebetteter Zugträger (z.B. aus Stahlcorden, Polyamidcorden), die zumeist in einem Riemen vorhanden sind, zusätzlicher Textilauflagen (z.B. Gewebe) und Schutzschichten sowie der oben genannten Riemenvarianten.

Ein gattungsgemäßer Riemen ist insbesondere aus der Offenlegungsschrift (1) bekannt. Hiernach besteht die Beschichtung aus einer vernetzten, polymerhaltigen Matrix, die einen fluorhaltigen Kunststoff, beispielsweise Polytetrafluorethylen (PTFE), enthält.

Als Gleitmittel sind neben den Fluorpolymeren auch Graphite, Molybdänsulfid, Silikate und andere Stoffe einsetzbar.

Als Bindermatrix werden häufig Polyurethansysteme verwendet, die bislang in einer Zweikomponentenreaktion von Polyisocyanaten und Polyolen gebildet werden. Im Rahmen eines zweikomponentigen Auftragens erfolgt daher die 2K-Polyurethan-Beschichtungsbildung ohne Reaktion mit der Luftfeuchtigkeit. Diese Polyurethanschichten sind sehr flexibel und binden das Gleitmittel gut ein. Die so behandelten Riemenoberflächen überleben den Betrieb auch auf den sehr bewegten Oberflächen der Riemen. Allerdings sind mit der 2K-Polyurethan-Beschichtung von Riemen auch Nachteile verbunden, die nun im Folgenden näher erläutert werden.

Nachteil der Zwei-Komponenten-Schicht ist die geringe Topfzeit von vier Stunden. Nach dieser Zeit stieg die Viskosität um 100 % an. Die führte dazu, dass außer Sprühverfahren keine alternativen Verfahren zum Einsatz kommen konnten. Hierbei wurde aufgrund der steigenden Viskosität eine maximale Verarbeitungszeit von 30 Minuten ermittelt. Danach mussten die Leitungen und Sprühpistolen gewechselt werden.

Weiterhin bildete das bisherige Zwei-Komponenten-System bei normaler Beschichtungsstärke keine geschlossene Oberfläche und sank stellenweise zusammen mit häufig eingesetzten funktionellen Stoffen, wie Baumwollflock oder Aramidflock, ins Riemeninnere ab. Für eine geschlossene Funktionsschicht musste daher bisher eine dicke, mehrstufig aufgetragene Schicht aufgebracht werden.

Der Erfindung liegt daher die Aufgabe zugrunde, einen Riemen, insbesondere Kraftübertragungsriemen, mit Polyurethan-Beschichtung bereit zu stellen, bei der die oben genannten Nachteile beseitigt werden, wobei als Grundforderung eine flexible Oberflächenbeschichtung gewährleistet sein muss und zudem optimierte Gleitreibungseigenschaften, gute dynamische Beständigkeit sowie eine positive Geräuschentwicklung erzielbar sind.

Gelöst wird diese Aufgabe dadurch, dass das zusammenhaltende Basismaterial der Beschichtung ein Polyisocyanurat - Polyharnstoff ist, das aus einem Isocyanat mit wenigstens zwei NCO-Gruppen als Basiskomponente gebildet ist, wobei durch geringe Mengen Wasser einige Harnstoffgruppen und durch geringe Mengen Diole oder Polyole einige Urethangruppen vorhanden sind.

In Bezug auf die kleinsten Isocyanatbausteine (Monomer) als Basiskomponente sind insbesondere folgende beiden Gruppen zu erwähnen:
- Das Isocyanat weist eine ausschließlich aliphatische Gerüststruktur auf, wobei die Kohlenstoffanzahl 4 bis 12 beträgt. Zu nennen sind hier insbesondere Tetramethylendiisocyanat, Hexamethylendiisocyanat (HDI),
   Dodecamethylendiisocyanat, 1,4-Diisocyanatocyclohexan und Isophorondiisocyanat (IPPD). Von besonderer Bedeutung ist HDI, was im Rahmen des experimentellen Teiles noch hervorgehoben wird.
- Das Isocyanat weist eine aliphatisch-aromatische Gerüststruktur auf. Zu nennen ist hier insbesondere Diphenylmethandiisocyanat (MDI).

Da die oben genannten Isocyanate leicht flüchtig und somit schwer verarbeitbar sowie zudem toxisch sind, liegt das Isocyanat vor der Reaktion mit Wasser insbesondere als Trimer mit symmetrischer oder asymmetrischer Konstitution, als Biuret oder als Urethdion vor.

Die Polyisocyanurat - Polyhamstoff-Beschichtung enthält insbesondere einen oder mehrere Zusatzstoff/e, wobei wiederum insbesondere folgende Zusatzstoffe zu erwähnen sind:
- Der Beschichtung ist Polyethylen (PE) und/oder Polytetrafluorethylen (PTFE) beigemischt. Diese Zusatzstoffe tragen insbesondere zur Optimierung der Gleiteigenschaften bei. Der Riemen ist dabei zumeist gewebefrei ausgebildet.
- Der Beschichtung ist Baumwolle und/oder Aramid beigemischt. Diese Zusatzstoffe tragen insbesondere zu einer positiven Geräuschentwicklung bei. Der Riemen ist auch hier zumeist gewebefrei ausgebildet.
- Der Beschichtung ist Graphit beigemischt, wobei hier der Riemen insbesondere mit einem Gewebe ausgestattet ist. Graphit trägt insbesondere zur Optimierung der Gleiteigenschaften bei.

Mit diesen Zusatzstoffen können die im Rahmen der Aufgabenstellung genannten Kriterien hinsichtlich Gleitreibungseigenschaften, dynamischer Beständigkeit und Geräuschentwicklung zusätzlich optimiert werden.

Weitere Mischungsbestanteile können beispielsweise Verarbeitungshilfsmittel, Farbstoffe, Entschäumer und gegebenenfalls ein Haftmittel sein. Dabei kann wegen der guten Haftfähigkeit der Polyisocyanurat - Polyhamstoff-Beschichtung zum Riemengrundkörper zumeist auf eine zusätzliche Haftmittelkomponente verzichtet werden.

Bislang sind Polyisocyanuratsysteme hauptsächlich aus der Schaumstoffindustrie bekannt. Hartschäume auf Basis gemischter Polyurethan- Polyisocyanurat werden in den Druckschriften EP 0 317 887 A2 und WO 2000/063281 A beschrieben. Es sind Netzwerke bevorzugt auf MDI-Basis die mit einem massiven Unterschuss an Polyolen gefertigt worden sind. Diese Materialien zeichnen sich durch eine sehr hohe Steifheit aus.

Netzwerke sind ferner in Form von Harnstoffbrücken, Biuretbrücken und Isocyanuratbrücken aus der Lackindustrie bekannt. Dabei werden sie als sehr starre Lacke beschrieben. Unter diesem Aspekt war es überraschend, dass derartige Systeme für flexible Oberflächenbeschichtungen bei Riemen, insbesondere Kraftübertragungsriemen, überhaupt einsetzbar sind.

Ferner liegt der Erfindung die Aufgabe zugrunde, ein Verfahren zur Herstellung eines Riemens, insbesondere eines Kraftübertragungsriemens, mit tiefziehfähiger flexibler Beschichtung bereit zu stellen, wobei zudem optimierte Gleiteigenschaften, gute dynamische Beständigkeit sowie eine positive Geräuschentwicklung erzielbar sind, wobei ferner das Verfahren unter Nichtbeachtung einer Topfzeit eine erhebliche Einsparung mit sich bringt und zudem Wege zu neuen Auftragstechniken eröffnet.

Gelöst wird diese Aufgabe durch wenigstens folgende Verfahrensschritte:
- eine Lösung oder Dispersion (Suspension), umfassend ein Lösungsmittel bzw. Dispersionsmittel, ein Isocyanat mit wenigstens zwei NCO-Gruppen sowie gegebenenfalls einen oder mehrere Zusatzstoff/e, wird auf die zu beschichtende bewegungsübertragende Riemenoberfläche aufgetragen;
- unter gleichzeitigem Verdunsten des Lösungsmittels bzw. Dispersionsmittel reagiert das Isocyanat mit der Umgebungsfeuchtigkeit (Luftfeuchtigkeit) zu einer noch sehr flexibel verformbaren Masse mit einzelnen Harnstoffgruppen (Polyharnstoffvornetzwerk);
- nach einer Trocknungszeit wird der Riemen vulkanisiert, wobei ein Ausreagieren zu einem Polyisocyanurat - Polyharnstoff erfolgt, das die Beschichtung des Riemens bildet.

Das Isocyanat mit den eingangs genannten Grundtypen, beispielsweise HDI, liegt vor der Reaktion mit der Umgebungsfeuchtigkeit insbesondere als Trimer, Biuret oder Urethdion vor.

Das Lösungsmittel bzw. Dispersionsmittel ist Toluol und/oder Xylol.

In Bezug auf die Lösung bzw. Dispersion gelangt folgende Zusammensetzung zum Einsatz:

| | | |
|---|---|---|
| Isocyanat | 30 bis | 60 Gew.-% |
| Zusatzstoff/e | 0 bis | 30 Gew.-% |
| Lösungsmittel/Dispersionsmittel | 70 bis | 10 Gew.-% |

Da zumeist ein oder mehrere Zusatzstoff/e eingemischt werden, gelangt insbesondere folgende Zusammensetzung zum Einsatz:

| | | |
|---|---|---|
| Isocyanat | 30 bis | 55 Gew.-% |
| Zusatzstoff/e | 5 bis | 30 Gew.-% |
| Lösungsmittel/Dispersionsmittel | 65 bis | 15 Gew.-% |

Weitere besonders zweckmäßige Zusammensetzungen, wobei sich die im experimentellen Teil angegebenen Versuche in diesen besonders zweckmäßigen Mengenbereichen bewegen, sind:

| | | | | |
|---|---|---|---|---|
| Isocyanat | 35 bis | 50 Gew.-%, insbesondere | 35 bis | 45 Gew.-% |
| Zusatzstoff/e | 10 bis | 25 Gew.-%, insbesondere | 15 bis | 25 Gew.-% |
| Lösungsmittel/Dispersionsmittel | 55 bis | 25 Gew.-%, insbesondere | 50 bis | 30 Gew.-% |

### Experimenteller Teil

Die folgende Tabelle hält Riemen mit sieben verschiedenen Beschichtungszusammensetzungen in Gew.-% auf der Basis von Desmodur N100 (HDI-Biuret) und die jeweilige Beurteilung fest, wobei die Riemen mit der Mehrheit der Kennzeichnung ++ die besten Ergebnisse aufweisen.

| **Beurteilung von Riemeneigenschaften in internen Tests** | | | | | | | |
|---|---|---|---|---|---|---|---|
| Desmodur N100 | 40 | 40 | 40 | 39 | 39 | 39 | 30 |
| PTFE Pulver | 10 | | | 10 | | | |
| Graphit | | 10 | | | 10 | | |
| Cotton | | | 10 | | | 10 | 10 |
| Xylol | 50 | 50 | 50 | 50 | 50 | 50 | 50 |
| 1.6 Hexandiol | 0 | 0 | 0 | 1 | 1 | 1 | 10 |
| | | | | | | | |
| Flexibilität | + | + | + | ++ | ++ | ++ | ++ |
| Gleitverhalten | ++ | ++ | + | ++ | ++ | + | - - |
| Schichtanhaftung | + | + | + | + | ++ | ++ | - - |
| Ermüdungsbeständigkeit | + | + | + | ++ | ++ | ++ | ++ |
| Temperaturbeständigkeit | ++ | ++ | ++ | + | + | + | - - |

Ferner werden anhand eines gewebefreien Riemens (A) sowie eines Riemens mit Gewebe (B, C) die Zusammensetzung, die verfahrenstechnischen Parameter wie auch die bevorzugten Isocyanattypen näher vorgestellt.

### Riemen A

Die bewegungsübertragende Riemenoberfläche wird mit einer Dispersion in folgender Zusammensetzung beschichtet:

| | | | |
|---|---|---|---|
| Polyisocyanuratbiuretlösung (Desmodur N75 MPA) | | | 40 Gew.-% |
| Zusatzstoff (a, b, c) | | | 10 Gew.-% |
| Xylol | | | 50 Gew.-% |

| | | |
|---|---|---|
| Versuch a: PTFE | Versuch b: Aramid | Versuch c: Baumwolle |

Die Oberfläche lässt man an der Luft unter gleichzeitigem Verdunsten des Lösungsmittels bzw. Dispersionsmittels ausreagieren, wobei die umgebende Luftfeuchtigkeit der Reaktionspartner des Desmodur N75 ist. Die Oberfläche ist nach etwa zwei Stunden trocken. Mit der Feuchtigkeit haben sich Harnstoffbindungen gebildet.

Der Riemen wird in eine Form eingeformt. Dabei erweist sich die anreagierte Schicht als außergewöhnlich gut tiefziehfähig. Der Riemen wird dann bei 180°C wenigstens zwanzig Minuten lang vulkanisiert. Während dieser Phase reagieren die restlichen Isocyanatanbindungen zu Isocyanuratringen, die wie die Harnstoffbindungen als sehr thermisch stabil gelten.

### Riemen B:

Die bewegungsübertragende Riemenoberfläche wird mit einer Dispersion in folgender Zusammensetzung beschichtet:

| | | | |
|---|---|---|---|
| Hexamethylendiisocyanatbiuret (Desmodur N100) | | | 40 Gew.-% |
| Graphit | | | 20 Gew.-% |
| Xylol | | | 40 Gew.-% |

Aufgerührt wird diese Mischung mit einem Intensivmischer. Hinsichtlich der weiteren Verfahrenstechnologie wird auf die Herstellung des Riemens (A) verwiesen.

### Riemen C:

Die bewegungsübertragende Riemenoberfläche wird mit einer Dispersion in folgender Zusammensetzung beschichtet:

| | |
|---|---|
| Hexamethylendiisocyanatbiuret (Desmodur N100) | 39 Gew.-% |
| 1.6 Hexandiol | 1 Gew.-% |
| Graphit | 20 Gew.-% |
| Xylol | 40 Gew.-% |

Der Riemen C zeigt eine bessere Flexibilität als der Riemen B. Man sieht, dass einige Polyurethangruppen die Flexibilität des Netzwerks erhöhen, ohne die Nachteile eines Reinen Polyurethans zu ergeben.

Eine Versuchsreihe hat ferner ergeben, dass mit folgenden Hexamethylendiisocyanattypen (Kurzbezeichnung HDI) unter dem Aspekt der Haftung, Flexibiltät und Verarbeitbarkeit die besten Ergebnisse erzielt wurden, nämlich:
Desmodur N100 (HDI Biuret)
Desmodur N3600 (HDI Trimer)
Desmodur N3300 (HDI Trimer)
Desmodur N3400 (HDI Urethdion)
Desmodur XP2410 (HDI Trimer Asymmetrisch)

Die hier aufgeführten Handelsbezeichnungen beinhalten Produkte der Bayer AG.

Mit dem Einsatz einer Polyisocyanurat - Polyharnstoffbeschichtung sind Auftragstechniken, wie Roller-Coating oder andere neuartige Druckverfahren möglich, mit denen der nicht unerhebliche OverSpray-Anteil des Sprühprozesses erheblich reduziert werden kann.

Die Erfindung wird nun anhand von Ausführungsbeispielen unter Bezugnahme auf schematische Zeichnungen erläutert. Es zeigen:
- Fig.1: eine dreidimensionale Darstellung eines Zahnriemens mit Draufsicht auf die bewegungsübertragende Riemenoberfläche mit Beschichtung;

- Fig.2: einen Längsschnitt durch einen Zahnriemen mit einer Beschichtung für die bewegungsübertragende Riemenoberfläche, wobei verschiedene Beschichtungsvarianten vorgestellt werden.

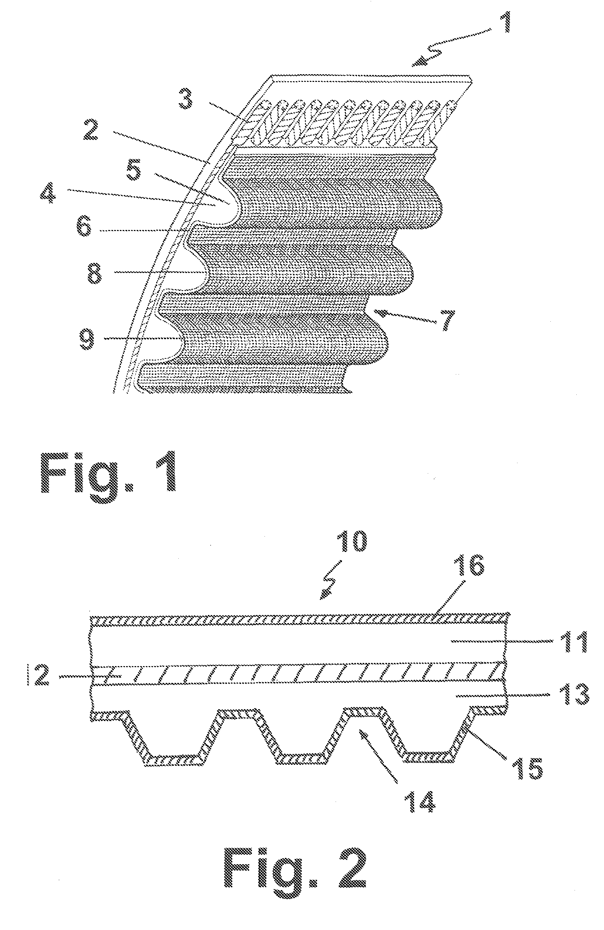

Fig. 1 zeigt einen Riemen 1 in Form eines Zahnriemens mit einer Decklage 2 als Riemenrücken mit mehreren eingebetteten und parallel verlaufenden Zugsträngen 3 als Festigkeitsträger sowie mit einem Unterbau 4. Die Decklage und der Unterbau bilden dabei als Gesamteinheit den elastischen Riemengrundkörper, der aus einem elastomeren Werkstoff besteht, insbesondere in Form einer vulkanisierten Kautschukmischung. Als Kautschukkomponente wird zumeist ein Ethylen-Propylen-Mischpolymerisat (EPM), ein Ethylen-Propylen-Dien-Misch-Polymerisat (EPDM), ein (teil)hydrierter Nitrilkautschuk (HNBR), Chloropren-Kautschuk (CR) oder Fluor-Kautschuk (FKM) eingesetzt. Die Zugstränge bestehen aus Stahl, Polyamid, Aramid, Polyester, Glasfasern oder Kohlefasern.

Der Unterbau 4 ist mit einer zahnförmigen Profilierung, umfassend Zähne 5 und Zahnstege 6 , versehen und bildet die Kraftübertragungszone 7, die besonders verschleißanfällig ist durch Abrieb, Hitze und den Einfluss durch Öle. Aus diesem Grunde ist bereits vorgeschlagen worden, die Kraftübertragungszone mit einem Gewebe 8 als Abriebschutz zu versehen. Diese Gewebeauflage wird nach der Lehre des bereits eingangs zitierten Dokumentes WO 2005/080821 A1 zusätzlich mit einem fluorhaltigen Kunststoff getränkt, beispielsweise in Form von Polytetrafluorethylen (PTFE), und zwar bei einem hohen Füllungsgrad dieses Kunststoffes, wobei gleichzeitig eine Beschichtung 9 (Versiegelung) als zusätzliche ölbeständige Schutzschicht gebildet wird.

Bei dem neuen Riemen 1 ist im Hintergrund der eingangs erwähnten Aufgabenstellung die Beschichtung 9 ein Polyisocyanurat - Polyharnstoff, das aus einem Isocyanat mit wenigstens zwei NCO-Gruppen als Basiskomponente während der Vulkanisation gebildet wird. Das Netzwerk enthält neben der Hauptmenge Isocyanuratgruppen noch Biuretgruppen aus dem Rohstoff, Harnstoffgruppen aus den verwendeten Feuchtigkeitsmengen und Urethangruppen aus den geringfügig beigefügten Diolen oder Polyolen

Der Riemen 10 nach Fig. 2, wiederum in Form eines Zahnriemens, umfasst eine Decklage 11 als Riemenrücken, Zugstränge 12 und einen Unterbau mit einer zahnförmigen Kraftübertragungszone 14. Die Kraftübertragungszone ist hier mit einer Beschichtung 15 versehen, die ebenfalls ein Polyisocyanurat - Polyharnstoff ist. Diesbezüglich sind insbesondere folgende Beschichtungsvarianten zu nennen:
- Der Beschichtung 15 ist PE und/oder PTFE beigemischt, insbesondere in einer gewebefreien Ausführung.
- Der Beschichtung 15 ist Baumwolle und/oder Aramid beigemischt, insbesondere wiederum in einer gewebefreien Ausführung.
- Der Beschichtung 15 ist Graphit beigemischt, hier insbesondere in Verbindung mit einem Gewebe 8 (Fig. 1).

Der Riemen 10 ist hier im Bereich der Decklage 11 noch mit einem Rückengewebe 16 ausgestattet. Diesbezüglich sind auch gewebefreie Ausführungen bekannt (Fig. 1).

### Bezugszeichenliste (Teil der Beschreibung)

- 1: Riemen (Kraftübertragungsriemen) in Form eines Zahnriemens
- 2: Decklage als Riemenrücken
- 3: Festigkeitsträger in Form von Zugsträngen
- 4: Unterbau
- 5: Zahn
- 6: Zahnsteg
- 7: bewegungsübertragende Riemenoberfläche (Kraftübertragungszone)
- 8: Gewebe (Zahnauflage)
- 9: Beschichtung
- 10: Riemen (Kraftübertragungsriemen) in Form eines Zahnriemens
- 11: Decklage als Riemenrücken
- 12: Festigkeitsträger in Form von Zugsträngen
- 13: Unterbau
- 14: bewegungsübertragende Riemenoberfläche (Kraftübertragungszone)
- 15: Beschichtung
- 16: Rückengewebe

## Patentansprüche

1. Riemen (1, 10), insbesondere Kraftübertragungsriemen, aus elastomerem Werkstoff, wobei mindestens die verschleißabhängige, bewegungsübertragende Riemenoberfläche (7, 14) eine Beschichtung (9, 15) aus polymerem Werkstoff mit reibungsverringernden, die Gleiteigenschaften begünstigenden Eigenschaften aufweist, **dadurch gekennzeichnet, dass** das zusammenhaltende Basismaterial der Beschichtung (9, 15) ein Polisocyanurat - Polyharnstoff ist, das aus einem Isocyanat mit wenigstens zwei NCO-Gruppen als Basiskomponente gebildet ist, wobei durch geringe Mengen Wasser einige Harnstoffgruppen und durch geringe Mengen Diole oder Polyole einige Urethangruppen vorhanden sind.

2. Riemen nach Anspruch 1, **dadurch gekennzeichnet, dass** das Isocyanat eine ausschließlich aliphatische Gerüststruktur aufweist.

3. Riemen nach Anspruch 2, **dadurch gekennzeichnet, dass** Tetramethylendiisocyanat, Hexamethylendiisocyanat (HDI), Dodecamethylendiisocyanat, 1,4-Diisocyanatocyclohexan oder Isophorondiisocyanat (IPPD) zum Einsatz gelangen.

4. Riemen nach Anspruch 1, **dadurch gekennzeichnet, dass** das Isocyanat eine aliphatisch-aromatische Gerüststruktur aufweist.

5. Riemen nach Anspruch 4, **dadurch gekennzeichnet, dass** Diphenylmethandiisocyanat (MDI) zum Einsatz gelangt.

6. Riemen nach einem der Ansprüche 1 bis 5, **dadurch gekennzeichnet, dass** das Isocyanat vor der Reaktion mit Wasser als Trimer, Biuret oder als Urethdion vorliegt.

7. Riemen nach einem der Ansprüche 1 bis 6, **dadurch gekennzeichnet, dass das** die Polyisocyanurat - Polyharnstoffbeschichtung (9, 15) einen oder mehrere Zusatzstoff/e enthält.

8. Riemen nach Anspruch 7, **dadurch gekennzeichnet, dass** Polyethylen (PE) und/oder Polytetrafluorethylen (PTFE) und/oder Baumwolle und/oder Aramid und/oder Graphit beigemischt ist/sind.

9. Riemen nach Anspruch 7 oder 8, **dadurch gekennzeichnet, dass** ein Verarbeitungshilfsmittel und/oder ein Farbstoff und/oder ein Entschäumer und/oder ein Haftmittel sowie gegebenenfalls weitere Zusatzstoffe beigemischt ist/sind.

10. Verfahren zur Herstellung eines Riemens (1, 10), insbesondere eines Kraftübertragungsriemens, aus elastomerem Werkstoff, wobei mindestens die verschleißabhängige, bewegungsübertragende Riemenoberfläche (7, 14) eine Beschichtung (9, 15) aus polymerem Werkstoff mit reibungsverringernden, die Gleiteigenschaften begünstigenden Eigenschaften aufweist, **gekennzeichnet durch** wenigstens folgende Verfahrensschritte:
- eine Lösung oder Dispersion, umfassend ein Lösungsmittel bzw. Dispersionsmittel, ein Isocyanat mit wenigstens zwei NCO-Gruppen sowie gegebenenfalls einen oder mehrere Zusatzstoff/e, wird auf die zu beschichtende bewegungsübertragende Riemenoberfläche (7, 14) aufgetragen;
- unter gleichzeitigem Verdunsten des Lösungsmittels bzw. Dispersionsmittels reagiert das Isocyanat mit der Umgebungsfeuchtigkeit zu einer noch sehr flexibel verformbaren Masse mit einzelnen Harnstoffgruppen;
- nach einer Trocknungszeit wird der Riemen (1, 10) vulkanisiert, wobei ein Ausreagieren zu einem Polyisocyanurat - Polyharnstoff erfolgt, das die Beschichtung (9, 15) des Riemens (1, 10) bildet.

11. Verfahren nach Anspruch 10, **dadurch gekennzeichnet, dass** ein Isocyanat eingesetzt wird, das eine ausschließlich aliphatische Gerüststruktur aufweist.

12. Verfahren nach Anspruch 11, **dadurch gekennzeichnet, dass** Tetramethylendiisocyanat, Hexamethylendiisocyanat (HDI), 1,4-Diisocyanatocyclohexan oder Isophorondiisocyanat (IPPD) eingesetzt wird.

13. Verfahren nach Anspruch 10, **dadurch gekennzeichnet, dass** ein Isocyanat eingesetzt wird, das eine aliphatisch-aromatische Gerüststruktur aufweist.

14. Verfahren nach Anspruch 13, **dadurch gekennzeichnet, dass** Diphenylmethandiisocyanat (MDI) eingesetzt wird.

15. Verfahren nach einem der Ansprüche 10 bis 14, **dadurch gekennzeichnet, dass** ein Isocyanat eingesetzt wird, das vor Reaktion mit der Umgebungsfeuchtigkeit als Trimer, Biuret oder als Urethdion vorliegt.

16. Verfahren nach einem der Ansprüche 10 bis 15, **dadurch gekennzeichnet, dass** die Lösung oder Dispersion einen oder mehrere Zusatzstoff/e enthält.

17. Verfahren nach Anspruch 16, **dadurch gekennzeichnet, dass** die Lösung oder Dispersion Polyethylen (PE) und/oder Polytetrafluorethylen (PTFE) und/oder Baumwolle und/oder Aramid und/oder Graphit enthält.

18. Verfahren nach Anspruch 16 oder 17, **dadurch gekennzeichnet, dass** die Lösung oder Dispersion ein Verarbeitungshilfsmittel und/oder einen Farbstoff und/oder einen Entschäumer und/oder ein Haftmittel sowie gegebenenfalls weitere Zusatzstoffe enthält.

19. Verfahren nach einem der Ansprüche 10 bis 18, **dadurch gekennzeichnet, dass** als Lösungsmittel bzw. Dispersionsmittel Toluol und/oder Xylol eingesetzt wird.

20. Verfahren nach einem der Ansprüche 10 bis 19, **dadurch gekennzeichnet, dass** in Bezug auf die Lösung bzw. Dispersion folgende Zusammensetzung zum Einsatz gelangt:
| | | |
|---|---|---|
| Isocyanat | 30 bis | 60 Gew.-% |
| Zusatzstoff/e | 0 bis | 30 Gew.-% |
| Lösungsmittel/Dispersionsmittel | 70 bis | 10 Gew.-% |

21. Verfahren nach einem der Ansprüche 10 bis 20, **dadurch gekennzeichnet, dass** der Riemen (1, 10) bei 160 bis 190°C vulkanisiert wird.

22. Verfahren nach einem der Ansprüche 10 bis 21, insbesondere in Verbindung mit Anspruch 21, **dadurch gekennzeichnet, dass** der Riemen (1, 10) wenigstens 20 Minuten lang vulkanisiert wird.
